# EUROPEAN PATENT APPLICATION

(11) **EP 2 175 338 A1**
(43) Date of publication of application: **14.04.2010**
(21) Application number: 08290961.5
(22) Date of filing: 13.10.2008
(51) Int. Cl.: G05D 1/06

(54) **Steering aid method and system for landing on a target of a moving platform, and a 3 d vehicle equipped as such**

(71) Applicant: Université de la Méditerranée, 13007 Marseille (FR)
(72) Inventor: Ruffier, Franck, 13006 Marseille (FR); Franceschini, Nicolas Henri, 13009 Marseille (FR)
(74) Representative: Novagraaf IP

(57) **Abstract**

The present invention describes an automatic control system for an aircraft that is to land on a target situated on a platform subject to horizontal and/or vertical movement such as, for example, the deck of a cruising ship moved up and down by the sea.

The present invention proposes to regulate, i.e., to maintain constant, the angular position of the target defined from the aircraft to control the aircraft pitch and therefore its speed and altitude.

According to an embodiment, a steering aid system (20) for landing an aircraft (10) is equipped with a forward thrust control mechanism (21) and a vertical lift control mechanism (28) to propel the aircraft (10). The horizontal speed (Vₓ) and height of flight (h(t)) of the aircraft relative to the platform are controlled by canting the pitch (⊝) and varying the power developed by the control means (21, 28), respectively. The current angular position signal (α(t)) of the target is measured by a target sensor (22) and used in a feedback loop (SL1, 23, Δ) that slaves the signal (α(t)) to a reference value (α₀). As the angular position (α(t)) increases during the landing (25), the pitch (⊝) is controlled (21) to reduce the aircraft speed (Vₓ). A second servo-loop (SL2, 23', Δ') controls the altitude (h(t)) by varying the power developed vertically to maintain the measured angular speed (w) to a reference value (ω₀), the said measured angular speed is provided by a ground angular speed sensor (24).

## Description

The invention relates to a steering aid method for controlling a 3 D vehicle able to move in three dimensions, in particular an aircraft, when landing on a target of a moving platform in vertical and/or horizontal displacement, for instance reproducing the surge, and a system to implement such a method. The invention relates also to a 3 D vehicle - aircrafts, spacecrafts, underwater vehicles - equipped with such a system to reach a target of a moving platform.

Landing on a target of a moving platform is nowadays based on avoiding collisions with the platform. The pilot must therefore continuously monitor and control both the altitude and the horizontal speed of the aircraft as referred to the ground. To help the pilot control altitude and the horizontal speed to land on a moving platform, from the pitch and the power to develop lifting means, automatic steering means are known.

Automatic steering methods, classically controlled from the platform, consist of:
- calculating quickly the platform behaviour from different inertial sensors and/or GPS,
- determining urgently an optimal landing path for the aircraft, and
- enslaving the aircraft to follow the determined landing path, which is to be refreshed via a dedicated full duplex radiofrequency link between the aircraft and the platform.

In EP0682332 patent document, the system comprises a first GPS receiver located in the vicinity of the platform, a second GPS receiver installed in the aircraft, a radio link between the GPS receivers to transmit positions data of the aircraft and of the platform, and a processor located on the platform or in the aircraft to calculate the relative position of the aircraft and eliminate the systematic errors of the GPS system. Such solutions require implementing two systems, one onboard the aircraft and one on the platform, as well as a radiofrequency data link between them. Such a radio data link are emissive and even encoded may be subject to interferences and noise, delays and other real time problems, asynchronisation, jamming and unexpected interruptions (called "drop-outs"). Furthermore, these systems are complex, bulky, heavy, power-hungry and expensive.

In Saparelli et al: "Visually guided landing of an unmanned aerial vehicle" IEEE Transactions on Robotics and Automation, vol. 19(3), pages 371-381, 2003, the system use vision for precise target detection and recognition, and a combination of vision and GPS for guiding the aircraft until Landing. Such solution requires precise differential GPS to estimate the helicopter ground height, which would not be applicable if the platform altitude is changing.

The present invention aims to overcome the above drawbacks by proposing reliable and non-emissive as well as simpler steering aid system and method for landing on a target of a moving platform, without any needs to directly measure the speed and the distance between the aircraft and the target on the moving platform. To reach this goal, the invention is based on the regulation of the angular position of the target defined from the aircraft to control at every moment the aircraft pitch and therefore its speed.

More precisely, the present invention relates to a steering aid method for landing an aircraft on a target positioned on a moving platform, the aircraft having a relative flight height and a relative horizontal speed with respect to the platform controlled respectively by lift and pitch variations, wherein the target position is defined by an angular position determined by extracting relative position data from a detection of the target seen from the aircraft, wherein the angular position of the target as currently detected is slaved to a reference value at every moment by automatically steering the pitch (Θ) of the aircraft during the landing to control the horizontal speed of the aircraft, and wherein the ratio between flight height relative to the platform and current speed of the aircraft is slaved to a second reference value at every moment by automatically driving the lift.

According to more specific embodiments:
- a ground angular speed (ω) as seen from the aircraft is representative of said ratio automatically maintained between the relative altitude and the relative speed, a current angular speed being measured at every moment by detecting a platform scrolling downrightly as visualised from the aircraft in order to steer automatically the power of the aircraft vertically developed during the landing;
- the aircraft having a horizontal displacement relative to the target and a flight height relative to the platform, the relative horizontal displacement and flight height are controlled dynamically by the angular position and the angular speed slaving processes, respectively ;
- the angular position of the target is measured by extracting relative position data seen from the aircraft using a target detection system and is slaved to the reference value.

Therefore, the landing can be automatically steered by acting simultaneously on the horizontal and vertical displacements of the aircraft, using two servo-loops involving three degrees of freedom: pitch, horizontal displacement and flight height.

The invention also relates to a steering aid system for landing an aircraft equipped with lifting means and pitch control mechanism on a target of a moving platform to implement said method, in which relative flight height and horizontal speed of the aircraft with respect to the platform are controlled by varying power developed by the lifting means of the aircraft and by canting the pitch with the pitch control mechanism, wherein it comprises:
- at least one sensor device able to provide a current angular position signal of the target at every moment as seen from the aircraft, and
- means forming a servo-loop for slaving the angular position signal of the target to a reference value, this means being able to automatically vary the pitch by the control mechanism for slaving the measured signal to the reference value.

According to preferred embodiments:
- the system further comprises at least another sensor device able to provide a current angular speed signal of the aircraft and means forming a second servo-loop for slaving the angular speed signal to a second reference value by automatically varying the power developed by the lifting means, said second reference corresponds to a ratio between speed and flight height that the aircraft maintains;
- the sensor device is measured by an optic flow measurement device which processes spatio-temporally the visual signals given by an imager, e. g. camera or photodiodes;
- the system comprises, in each of the first and second servo-loop, a control mechanism to respectively control independently the pitch and the lifting means, and a substractor able to calculate an input for the corresponding controller from the difference between the corresponding signal and a reference value in order to compensate for said difference;

A further aspect of the invention is a 3 D vehicle equipped of a steering aid system as defined above to reach a target of a moving platform.

The invention will be better understood with the following only explanatory description of a preferred and non-limiting example of implementation of the invention with reference to the enclosed drawings that represent:
- Figure 1, a schematic cross view section in a vertical plan of a helicopter equipped with a steering aid system of the invention, the helicopter approaching a cruising ship in order to land on the deck of the ship, and
- Figure 2, a schematic block diagram of an example of steering aid system according to the invention.

Throughout the present text, the wording "horizontal" and "vertical" means relative to a reference ground, e. g., the platform for the aircraft, since this platform is supposed to move only in surge and heave, without pitch or roll, i.e., to remain parallel to itself and to such a reference ground, for instance the sea surrounding a ship as a platform.

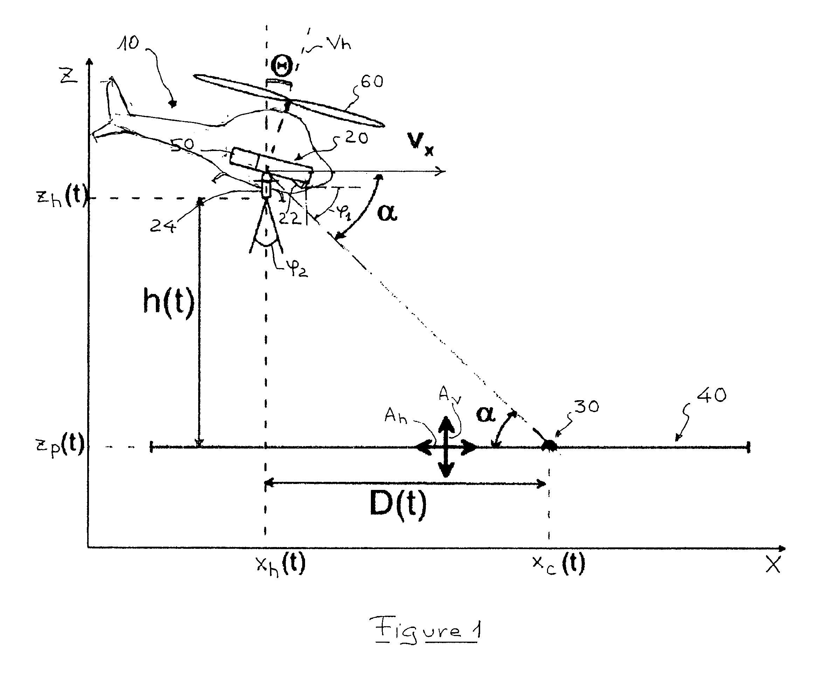

Figure 1 illustrates a schematic vertical view, in a vertical plan (Z, X), of a helicopter 10 equipped with a steering aid system 20 of the invention and approaching the target 30 of a moving platform 40, in order to land on this target. In this example, the platform is a cruising ship moving up and down by the sea and the target a landing deck. Thus the ship is supposed to move horizontally (surge along axis X) and vertically (heave along axis Z) according to double arrows Ah and Av.

The steering aid system 20 comprises two sensors mounted to catch forward and downward sights: a target position sensor 22 with a wide forward field of view ϕ₁ and an angular speed sensor 24 with a downward field of view ϕ₂. The target position sensor 22 is enabled to measure the angular position α of the target 30 to be reached and the angular speed sensor 24 measures downwards the ground scroll.

At moment t, the helicopter 10 flies at an altitude Zₕ(t) and a height h(t) above the ship 40 whose altitude is zₚ(t). The helicopter 10 is horizontally distant from the deck 30 by a displacement quantity D(t) that represents the difference between the deck position X_{c}(t) and the helicopter horizontal position Xₕ(t). Furthermore, the helicopter has a horizontal speed Vₓ relative to the horizontal speed of the ship 40.

The pitch angle Θ, defined by the forward inclination of the helicopter proper vertical axis Vh relative to the vertical axis Z, and the power developed by the engine 50 to propel the helicopter 10 via the rotor 60 as lifting means, are two essential parameters to control the altitude h(t) and the horizontal speed Vₓ of the helicopter.

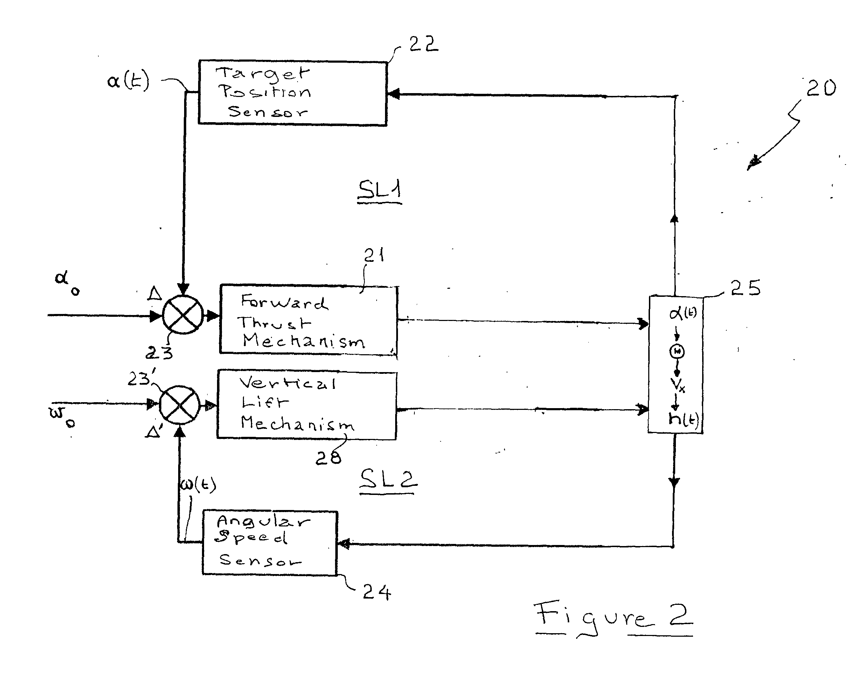

An example of aid system 20 to steer the landing of the helicopter 10 right to the target 30 by controlling the pitch, the horizontal speed and the altitude of the helicopter in view of the target is hereafter detailed by reference to Figure 2.

The system according to the invention associates a servo-loop SL1 to servo the angular position α of the target 30 as detected by the target position sensor 22 to a reference value α₀. To this end, a forward thrust control mechanism 21 drives the pitch Θ(t) to slave the detected α value to the reference α₀ value by calculating the corresponding difference Δ in a subtractor 23.

Now, changing the current pitch value Θ(t) acts upon the horizontal propulsion component of the power developed by the engine, and therefore directly upon the horizontal speed dynamics of the helicopter, i.e., upon its horizontal speed Vₓ relative to the platform.

The different position variables involved in landing: angular position α, pitch Θ and flight height h above the platform, along with dynamic variables such as the horizontal speed Vₓ, interact during the landing as indicated in a landing chart 25 and as follows.

When the helicopter is approaching the target, the angular position α increases. Now, in order to steer the landing in the best conditions, the helicopter will reach the target with a quasi-zero speed and a constant slope measured by the target position sensor 22. The angular position α is then decreased to keep the α value equal to the reference α₀. As said above, the forward thrust control 21 of SL1 drives the pitch Θ to reduce the horizontal speed Vₓ and the flight height h(t) is proportionally reduced to continue the landing. To control such a decrease, the rotor speed or collective pitch is driven by a vertical lift mechanism 28.

A preferred solution can be provided by another servo-loop SL2 that regulates the angular speed ω to maintain it constant. The angular speed is measured from the scroll of the platform as visualised from the aircraft vertically downwards by the angular speed sensor 24. The operative principle, on which the servo-loop SL2 is based, is described in the published application US 2006/0138277 filed by the applicant and incorporated here by reference.

The SL2 regulation acts on the vertical propulsion power of the helicopter and therefore on its altitude h(t) to maintain the measured angular speed ω - that represents the ratio Vₓ/h(t) - at a constant value, when Vₓ varies. The servo-loop SL2 is here enabled to provide the current flight height value h(t).

By regulating the angular speed ω, this second servo-loop SL2 is dedicated to maintain at every moment the flight height h(t) as a proportional function of the horizontal speed Vₓ, which is defined relatively to the target since the sensor 24 is only sensitive to the scroll of the platform vertically downwards.

The loop SL2 servoes the angular speed of the helicopter as detected by the sensor 24 to a reference value ω₀. To this end, the vertical lift control 28 acts on the rotor, speed rotor or a rotor collective pitch, to assign the angular speed ω to the reference value by reducing to zero the corresponding difference Δ' calculated by a subtractor 23'.

Now, changing the rotor (current speed or collective pitch) acts on the vertical propulsion component of the power developed by the engine, and therefore directly and dynamically on the flight height h(t) of the helicopter relative to the platform.

Thus, acting simultaneously on horizontal and vertical displacement of the helicopter, the steering system is a dual regulator that works out the three degrees of freedom: the pitch Θ, the horizontal displacement D(t) and the altitude h(t).

Uncoupling of the vertical and horizontal power controls is possible, in particular, onboard of rotary wing apparatus such as helicopters, drones, ULM (ultra light motorized), UAV (Unmanned Aerial Vehicle), MAV (Micro Aerial Vehicle), etc.

The present invention is not limited to the embodiments as described and represented. For instance, a system according to the invention can include more than one sensor of each type, i.e. to measure the angular speed of the aircraft or the angular position of the target in order to increase the global visual field by detecting in fields vertically centred as well as forwardly. Furthermore, such sensors can operate further than in the classical near infrared e.g. in the far infrared up to millimeter waves in order to land the aircraft whatever the weather, the target being equipped with corresponding emitting means. Moreover, acoustic sensors can also be used.

Furthermore, any type of lifting means can be used to cause vertical a well as horizontal dynamic of the aircraft motions: for example, propellers in various spatial directions, beating or vibrating wings, ducted fans, jet engines, retrorockets (for planetary landers), turbines (for submarine or ship docking), etc. Any type of pitching means can also be used. For example, rotor cyclic pitch, vectored propulsion, rockets, mass displacement, etc...

Furthermore, the prevent invention is also applicable for fixed-wing aircraft where SL1 will act upon the forward thrust by using the speed or collective pitch of main forward propeller and where SL2 will act upon the vertical lift by using the elevator.

## Claims

1. Steering aid method for landing an aircraft (10) on a target (30) positioned on a moving platform (40), the aircraft (10) having a relative flight height (h(t)) and a relative horizontal speed (Vₓ) with respect to the platform (40) controlled respectively by lift and pitch variations, wherein the target position is defined by an angular position (α) determined by extracting relative position data from a detection of the target seen from the aircraft (10), wherein the angular position (α) of the target (30) as currently detected is slaved to a reference value (α₀) at every moment by automatically steering the pitch (Θ) of the aircraft during the landing to control horizontal speed (Vₓ) of the aircraft (10), and wherein the ratio between the relative flight height (h(t)) and current speed (Vₓ) of the aircraft is slaved to a second reference value at every moment by automatically driving the lift.

2. Steering aid method according to claim 1, in which a ground angular speed (w) as seen from the aircraft representative of said ratio automatically maintained between the relative altitude (h(t)) and the relative speed (Vₓ) is slaved to a reference angular speed (ω₀), a current angular speed (w) being measured at every moment by detecting a platform scrolling downrightly as visualised (24) from the aircraft in order to steer automatically the power of the aircraft (10) vertically developed during the landing.

3. Steering aid method according to claim 2, in which, the aircraft having a horizontal displacement (D(t)) relative to the target (30) and a flight height ((h)t) relative to the platform (40), the relative displacement (D(t)) and flight height (h(t)) are controlled dynamically (25, 29) by angular position (α) and angular speed (w) slaving processes (SL1, SL2), respectively.

4. Steering aid method according to the preceding claim, in which the angular position (α) of the target (30) is determined as a function of a ratio (h/D) of the relative flight height (h) to the relative horizontal displacement (D) of the aircraft (10) and slaved to the reference value (α₀). (Est-ce que cette claim est utile ? Il me semble que oui car dans la revendication 1 on parle d'extraction de données de position et dans la revendication 4 on précise alors les données et la fonction utile de ces données)

5. Steering aid system (20) for landing an aircraft (10) equipped with lifting means (60) and forward thrust control mechanism (21) on a target (30) of a moving platform (40) to implement said method, in which relative flight height (h(t)) and horizontal speed (Vₓ) of the aircraft relative to the platform (40) are controlled by varying power developed by the lifting means (60) of the aircraft (10) and by canting the pitch (Θ) with the forward thrust control mechanism (21), wherein it comprises:
- at least one sensor device (22) able to provide a current angular position signal (α(t)) of the target (30) at every moment as seen from the aircraft , and
- means forming a servo-loop (SL1) for slaving the angular position signal (α(t)) to a reference value (α₀), this means being able to automatically vary the pitch (Θ) by the control mechanism (21) for slaving the measured signal (α(t)) to the reference value (α₀).

6. Steering aid system according to claim 5, further comprising at least another sensor device (24) able to provide a current angular speed signal (w(t)) of the aircraft (10), and means forming a second servo-loop (SL2) for slaving the angular speed signal (w(t)) to a second reference (ω₀) by automatically varying the power developed by the lifting means (60), said second reference corresponds to a ratio between speed and flight height ((V/h)₀) that the aircraft maintains.

7. Steering aid system according to claim 6, wherein it comprises, in each of the first (SL1) and second (SL2) servo-loop, a mechanism (21, 28) to respectively control independently the pitch (Θ) and the lifting means (60) and a substractor (23, 23') able to calculate an input for the corresponding control mechanism (21, 28) from the difference (Δ, Δ') between the corresponding signal (α, w) and a reference value (α₀, (Vₓ/h)₀) in order to compensate for said difference (Δ, Δ').

8. 3 D vehicle equipped of a steering aid system (20) according to anyone of claims 5 to 7 to reach a target of a moving platform.
